# FASCICULE DE BREVET EUROPEEN

(11) **EP 1 739 468 B1**
(45) Date de publication et mention de la délivrance du brevet: **20.10.2010**
(21) Numéro de dépôt: 06291037.7
(22) Date de dépôt: 23.06.2006
(51) Int. Cl.: F21S 8/10, F21V 7/00, G02B 6/00, G02B 6/26, F21S 8/12, F21Y 101/02

(54) **Dispositif d'éclairage ou de signalisation pour véhicule automobile**
Beleuchtungs- oder Signalvorrichtung für Kraftfahrzeuge
Lighting or signalling device for an automobile

(30) Priorité: 30.06.2005 FR 0506739
(43) Date de publication de la demande: 03.01.2007
(73) Titulaire: VALEO VISION, 93012 Bobigny Cedex (FR)
(72) Inventeur: De Lamberterie, Antoine, 75019 Paris (FR); Bourdin, David, 93190 Livry Gargan (FR)
(74) Mandataire: Tran, Chi-Hai

(56) Documents cités:
- WO-A-99/09349
- WO-A-99/15827
- FR-A- 2 853 392
- GB-A- 700 829
- US-A- 4 631 642
- US-A- 5 704 709
- US-A- 5 835 661
- US-A- 2003 156 417
- US-A- 2004 257 790

## Description

L'invention concerne un dispositif d'éclairage ou de signalisation comportant un guide optique, une diode électroluminescente et un embout de guide optique assurant un couplage entre cette source lumineuse de petite taille et le guide optique, ainsi qu'un étalement des rayons lumineux émis par cette source lumineuse pour une bonne homogénéité desdits rayons lumineux dans le guide optique.

L'invention trouve des applications dans le domaine de l'éclairage et de la signalisation pour véhicules automobiles.

Dans le domaine de l'éclairage et de la signalisation de véhicules automobiles, il est de plus en plus fréquent d'utiliser un ou plusieurs guides optiques dans un dispositif d'éclairage ou de signalisation afin d'émettre un faisceau lumineux. Un guide optique est un élément de matière transparente, généralement de section cylindrique, torique ou similaire, muni d'une face de réflexion munie de prismes qui permettent une sortie des rayons lumineux à travers une face dite d'émission, de manière à fournir un éclairement visible par un observateur. Les rayons lumineux se propageant également à l'intérieur du guide, par multiréflexion, depuis une première extrémité, proche d'une source lumineuse, jusqu'à une seconde extrémité, opposée à la première extrémité. La première extrémité est appelée face d'entrée du guide optique; la seconde extrémité est appelée face terminale dudit guide optique. La source lumineuse est placée à proximité de la face d'entrée du guide optique.

Le guide optique peut avoir différentes formes géométriques. Il peut, par exemple, former un cercle, un arc de cercle ou bien être rectiligne. Le guide optique comporte, sur sa longueur, une face lisse et continue constituant une face de sortie des rayons lumineux et une face à profil dentelé constituant une face de réflexion du guide optique. Cette face de réflexion comporte une succession de profils en dents de scie formant des prismes qui sont destinés à permettre aux rayons lumineux de sortir du guide optique. La face de réflexion ainsi que la face de sortie assure une multiréflexion des rayons lumineux à l'intérieur du guide optique.

Il est connu dans l'état de la technique antérieure d'utiliser une source lumineuse de petite taille telle qu'une diode électroluminescente, ou LED, qui est appliquée directement devant la face d'entrée du guide optique.

Lorsque la source lumineuse de petite taille est active, on observe une lumière inhomogéne en début de guide optique qui tend à devenir homogène après une certaine distance. Ce phénomène indésirable d'inhomogénéité de l'aspect éclairé du guide optique découle de l'existense de directions d'éclairage privilégiées qui sont associées à chaque prisme du guide optique, en début de guide optique. A une distance de quelques centimètres de la face d'entrée du guide optique, ce phénomène disparaît du fait des multiréflexions à l'intérieur du guide créant un mélange des modes, c'est-à-dire un mélange des directions de la lumière à l'intérieur du guide, et la lumière émise par le guide optique apparaît alors avec une répartition homogène.

Pour des raisons de confort visuel, il est souhaitable qu'un observateur regardant le guide optique aperçoive un aspect éclairé continue et homogène sur toute la longueur du guide optique.

Pour résoudre ce problème d'inhomogénéité en début de guide optique, une première technique propose d'utiliser un masque destiné à cacher le début du guide optique. Selon cette première méthode, le guide optique est réalisé de façon à ce que, d'une part, il ne comporte pas de prismes dans sa partie inhomogène et, d'autre part, cette partie inhomogène est cachée à l'intérieur du dispositif d'éclairage par un cache occultant ou par des éléments du dispositif lui-même. Cette partie inhomogène n'est donc pas visible pour l'observateur. Cependant, cette partie inhomogène est relativement grande par rapport à la longueur totale du guide optique, dans un dispositif d'éclairage ou de signalisation de véhicule. Ainsi, par exemple, pour un guide optique ayant un diamètre de 8 mm, la partie inhomogène a une longueur de l'ordre de 3 à 4 cm qui n'est pas facilement dissimulable dans un dispositif d'éclairage ou de signalisation de véhicule. Le masquage de cette partie inhomogène du guide optique entraîne donc des problèmes de compacité du dispositif.

Une autre technique utilisée pour résoudre ces problèmes d'inhomogénéité consiste à choisir une source lumineuse ayant une dimension sensiblement égale à la section du guide optique et qui fournit en entrée du guide des rayons lumineux qui restent identiques en tout point de ladite face d'entrée du guide optique. Autrement dit, cette source lumineuse doit être capable de fournir un même cône de lumière en tout point de la section d'entrée du guide optique. Une telle source lumineuse est réalisable au moyen d'un ensemble de fibres optiques assemblées ayant une sortie lumineuse qui fournit les rayons lumineux appropriés. Cette solution présente l'inconvénient d'être relativement coûteuse.

Par ailleurs, il est connu par le document FR-A-2564982, un embout de guide optique muni d'une cavité dans laquelle est placée une source lumineuse de petite taille. Cette cavité autorise une collimatation des rayons lumineux dans le guide et corrélativement un meilleur rendement lumineux. Cet embout selon FR-A-2564982 est représenté schématiquement sur la figure 1.

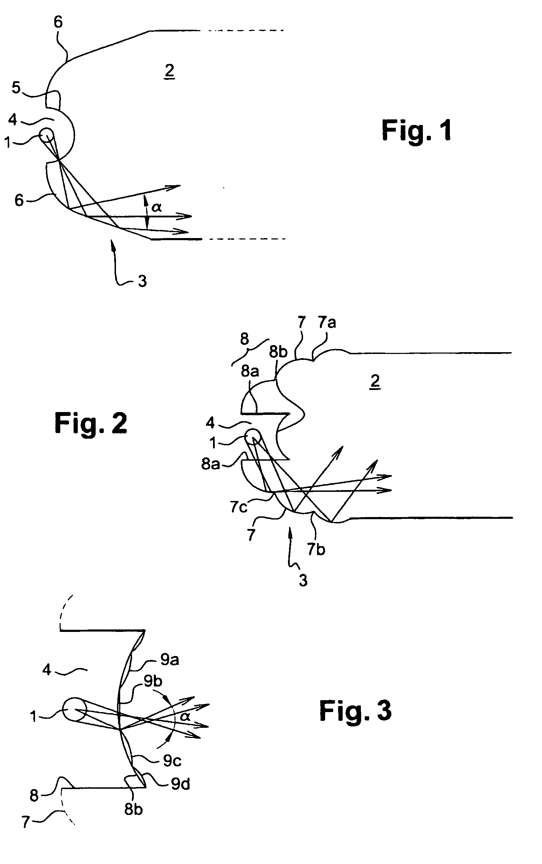

La figure 1 montre un guide optique 2 muni d'un embout 3 à proximité duquel est placée une source lumineuse 1 de petite taille. Cet embout 3 comporte une cavité 4 réalisée dans la face d'entrée du guide optique. Cette cavité 4 a une paroi concave et sphérique. Cette cavité 4 entoure la source lumineuse 1 de manière à ce que tout rayon lumineux issu de la source 1 et frappant sa paroi traverse ladite paroi sans déviation pour pénétrer à l'intérieur du guide optique 2. Dans cette solution, les rayons réfractés ou réfléchis par les surfaces et parois de l'embout 3 ont un angle de divergence α, montré à la figure 1, qui dépend essentiellement de la taille de la source lumineuse. Du fait que la source est de petite taille, les rayons lumineux sont peu divergents, ce qui peut avoir des conséquences directes sur l'homogénéité du guide optique en début de guide:
- soit parce qu'avec une faible divergence, les rayons rencontrent les prismes du guide optique 2 à 3 centimètres après la face d'entrée du guide optique,
- soit parce qu'avec une faible divergence, les rayons lumineux sont redirigés par les prismes dans des directions trop limitées, ce qui fait que le début du guide n'est pas visible depuis certaines directions, l'ouverture numérique dans le guide étant trop faible.
   En conséquence, la technique ci-dessus ne permet pas de garantir une bonne homogénéité et le guide optique peut avoir un aspect inhomogène sur une longueur de 2 à 3 cm depuis sa face d'entrée.
   L'invention a justement pour but de remédier aux inconvénients des techniques exposées précédemment. A cette fin, l'invention propose un embout de guide optique dans lequel un mélange des modes est garanti. L'embout selon l'invention permet l'utilisation d'une source lumineuse de petite taille tout en assurant une homogénéité du guide optique proche de la source lumineuse. Pour cela, l'embout selon l'invention comporte une surface de réception ayant un profil strié.
   De façon plus précise, l'invention concerne un dispositif d'éclairage ou de signalisation pour véhicule automobile selon la première revendication.

On comprend au sens de l'invention par « surface réceptrice » une surface de l'embout qui reçoit des rayons lumineux qui ont déjà traversé la cavité. Cette surface réceptrice se distingue de la surface de réflexion du guide optique à proprement parlé (l'embout étant intégré au guide ou étant rapporté sur celui-ci) en ce que cette surface réceptrice se situe sur une zone de section variable, avec une enveloppe généralement évasée, par exemple parabolique. La face de réflexion du guide, elle, se situe au niveau du guide lui-même, dans une zone où le guide a une section sensiblement constante. A noter que la zone réceptrice de l'embout a pour fonction de réfléchir par réflexion totale les rayons lumineux qui l'atteignent pour les renvoyer vers le guide, de préférence selon l'axe du guide.

L'invention peut comporter également une ou plusieurs des caractéristiques définies dans les revendications 2-12.

Avantageusement, on dispose d'éléments de découplage de la lumière, notamment des prismes additionnels à la jonction entre embout et guide proprement dit.

L'invention sera décrite ci après à l'aide d'exemples de réalisation non limitatifs à l'aide des figures suivantes :
La figure 1, déjà décrite, représente un exemple d'embout de guide optique selon l'art antérieur.
La figure 2 représente un exemple de guide optique équipé d'un embout selon l'invention.
La figure 3 représente un exemple non dans l'invention, d'une cavité avec un profil strié dans un embout.
Les figures 4A et 4B représentent un premier mode de réalisation des stries de l'embout selon l'invention.
Les figures 5A et 5B représentent un deuxième mode de réalisation des stries de l'embout selon l'invention.
Les figures 6A et 6B représentent un troisième mode de réalisation des stries de l'embout selon l'invention.
Les figures 7A et 7B représentent des exemples de lumières, vues par un observateur, dans le cas d'un guide optique classique et d'un guide optique avec un embout selon l'invention.

L'invention propose un dispositif selon la revendication 1, avec entre autres, un embout de guide optique permettant d'obtenir une homogénéité des rayons lumineux à faible distance d'une source lumineuse de petite taille. Un exemple d'un tel embout est représenté sur la figure 2. Cet embout 3, situé à l'extrémité du guide optique 2 formant la face d'entrée dudit guide, comporte une cavité 4 à l'intérieur de laquelle est placée, au moins partiellement, la source lumineuse de petite taille 1. Cette source lumineuse de petite taille est, dans l'exemple de la figure 2, une diode électroluminescente. Cette source lumineuse 1 est installée dans la cavité 4 de façon à être centrée dans l'ouverture de cette cavité.

Cette cavité 4 comporte une paroi 8 apte à être traversée par les rayons lumineux émis par la source lumineuse 1. Cette paroi 8 peut être concave et sphérique. Elle peut aussi comporter une paroi latérale 8a et un plafond 8b de forme non plane, par exemple convexe comme montré sur la figure 2.

L'embout 3 comporte également une surface 7 de réception des rayons lumineux. Cette surface de réception 7 a un profil strié réalisé sur une enveloppe de forme sensiblement parabolique. Autrement dit, l'embout 3 a une enveloppe de forme sensiblement parabolique sur laquelle sont formées des stries 7a, 7b, 7c. Ces stries, ou profils striés, peuvent prendre différentes formes qui seront décrites ultérieurement.

Ainsi, les rayons lumineux émis par la source de petite taille traversent la paroi 8 de la cavité 4 et se réfléchissent, avec une réflexion totale, sur la surface de réflexion 7. Cette réflexion totale permet de renvoyer un maximum du flux lumineux à l'intérieur du guide optique 2. Selon l'invention, la surface de réception 7 de l'embout 3 comporte une pluralité de stries 7a, 7b, 7c. Ces stries assurent une réflexion des rayons lumineux avec un grand angle de divergence α, ce qui permet un étalement des rayons lumineux à l'intérieur du guide optique 2. Comme expliqué précédemment, plus les rayons lumineux sont étalés à l'intérieur du guide optique et plus les modes sont rapidement mélangés. Ainsi, avec ce mélange des rayons lumineux, on obtient l'homogénéité du guide optique 2 à une faible distance de la source de petite taille 1. Ce mélange des rayons lumineux découle d'une ouverture numérique suffisante (par exemple de l'ordre de ± 35°) et du mélange des modes. Conformément à l'invention, on obtient donc des conditions qui permettent d'avoir, en tout point, une configuration où la divergence du faisceau est large et constante. On recrée ainsi, à partir d'une source de petite taille, l'effet obtenu par une source lumineuse étalée.

Selon l'invention, les stries comportent une succession de facettes planes, concaves ou convexes. Ces stries sont des profils de formes diverses réalisées dans la surface de réflexion 7 de l'embout 3 et permettant une transmission stigmatique des rayons lumineux. Ces profils striés permettent de réfléchir les rayons lumineux avec un angle divergent α plus important que l'angle obtenu avec une surface plane. La lumière peut ainsi être étalée de façon uniforme dans toute la section du guide optique. Des exemples de réflexion avec grande divergence des rayons lumineux sont montrés sur la figure 2.

Dans un mode de réalisation de l'invention, la paroi 8 de la cavité 4 comporte également un ou plusieurs profils striés. En particulier, le plafond 8b de la cavité peut comporter des stries 7a, 7b, 7c qui permettent d'étaler les rayons lumineux traversant la cavité 4 par le plafond 8b de ladite cavité. Dans l'exemple de la figure 2, le plafond 8b comporte une seule strie. Le plafond 8b est alors de forme convexe.

La figure 3 montre un exemple non dans l'invention, de plafond 8b de la cavité 4 comportant plusieurs stries 9a, 9b, 9c, 9d. Dans cet exemple, les stries 9 sont des facettes planes placées à la suite les unes des autres. Dans ce cas, les rayons lumineux traversent la paroi latérale 8a sans déviation et le plafond 8b avec une déviation offrant un angle de divergence α.

Selon cet exemple, tous les rayons lumineux émis par la source de petite taille 1, quelle que soit la direction d'émission, sont réfléchis avec un angle de divergence relativement important par la surface de réflexion et/ou par le plafond 8b de la cavité. De cette façon, l'étalement de ces rayons lumineux est obtenu, dans la section du guide optique, à proximité de la source de petite taille. Un étalement des rayons lumineux est obtenu environ à 4 à 10 mm de la source lumineuse. La zone à cacher à l'observateur regardant le guide optique a donc une longueur fortement réduite par rapport à l'état de la technique.

Conformément à l'invention, la forme des stries sera choisie de manière à gérer au mieux les risques de perte du flux lumineux. En effet, la forme des stries permet de contrôler l'ouverture des rayons lumineux dans le guide optique.

Les stries peuvent être, par exemple, planes, concaves ou convexes. Dans l'exemple de la figure 2, les stries 7a, 7b, 7c sont convexes. La forme concave peut être particulièrement intéressante, car plus facile à usiner qu'une forme convexe. Les stries peuvent également avoir des formes sinusoïdales, continues ou discontinues.

En plus de la forme, la flèche de la strie peut également varier pour permettre un contrôle de la réflexion des rayons lumineux. On appelle « flèche » la profondeur entre la surface de l'enveloppe de l'embout et la surface de la strie. Cette flèche peut varier en fonction de la réflexion souhaitée. Il est à noter qu'on choisit de préférence une flèche permettant de garantir une réflexion totale des rayons lumineux.

Le nombre de profils striés dans un embout est variable. Il dépend de la taille de l'embout et du rayon de courbure de la cavité de l'embout et/ou de l'enveloppe de l'embout. Par exemple, pour un guide optique ayant une section de 8 mm, on peut choisir de diviser l'embout en 8 parties de 1 mm, avec 6 profils striés sur la surface de réflexion et 2 profils striés sur le plafond de la cavité.

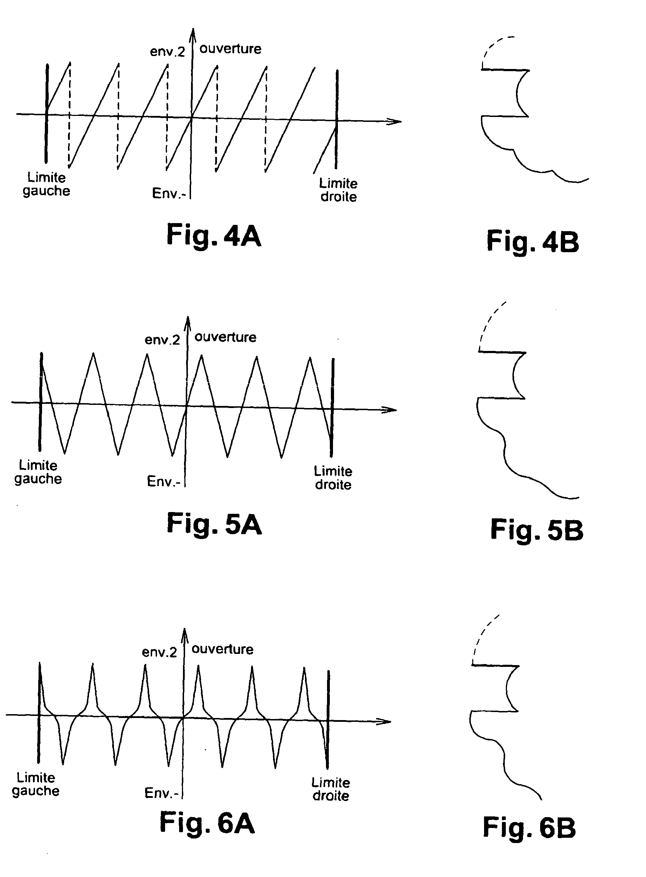

Les figures 4A a 6B représentent des modes de réalisation des profils striés de l'embout selon l'invention. Les figures 4A, 5A et 6A représentent la direction du rayon réfléchi par la face externe ou réfracté par le fond de la cavité par rapport à l'axe du guide, et cela pour trois profils différents. Les figures 4B, 5B et 6B représentent la forme du profil obtenu, respectivement pour les courbes des figures 4A, 5A et 6A.

Plus précisément, les figures 4A et 4B concernent un profil strié avec discontinuité de tangente. Dans ce cas, les profils striés obtenus sont tangentiellement discontinus. La forme de ces profils correspond à une succession de U évasés formant des cuvettes, la jonction des extrémités de deux cuvettes étant discontinue en tangence.

Les figures 5A et 5B représentent un profil strié avec continuité de tangente. Dans ce cas, la courbe représentative de la tangente est régulière et continue. Le profil obtenu forme des sortes de vagues, c'est-à-dire qu'il a une forme sinusoïdale ou pseudo-sinusoïdale.

Les figures 6A et 6B montrent un exemple de profil strié réalisé de façon à optimiser la lumière dans l'axe du guide optique. La figure 6A montre que la tangente a une forme continue présentant des plats. Le profil strié obtenu dans ce cas correspond à une forme sinusoïdale avec des courbures aplaties (c'est-à-dire que les sommets des vagues sont aplatis par rapport à une sinusoïde classique) et des pentes plus raides entre deux courbures. De tels profils striés permettent de privilégier certaines directions des rayons lumineux, notamment la direction de l'axe du guide optique.

On comprend, au regard de ces exemples de stries, que l'embout selon l'invention permet de contrôler la répartition du flux lumineux à l'intérieur du guide optique. On peut ainsi choisir le profil le plus adapté pour l'embout de façon à obtenir l'ouverture numérique souhaitée. Ce contrôle de l'ouverture numérique peut être obtenu en chaque point de l'embout. Pour cela, plusieurs types de profils peuvent être associés les uns aux autres sur un même embout. Par exemple, les stries du plafond de la cavité peuvent être de forme ou de flèche différente des stries de la surface de réflexion. La surface de réflexion peut elle-même comporter des stries de forme ou de flèche différentes.

Les figures qui viennent d'être décrites montrent des exemples de stries dans un plan. Selon une forme de réalisation particulière, dans l'espace 3D, les stries sont de révolution sur l'embout, c'est-à-dire qu'elles peuvent réparties sur le contour de l'embout. Bien entendu, d'autres configuration 3D sont possibles et restent dans le cadre de l'invention, celles-ci étant choisies par l'homme du métier en fonction des applications envisagées.

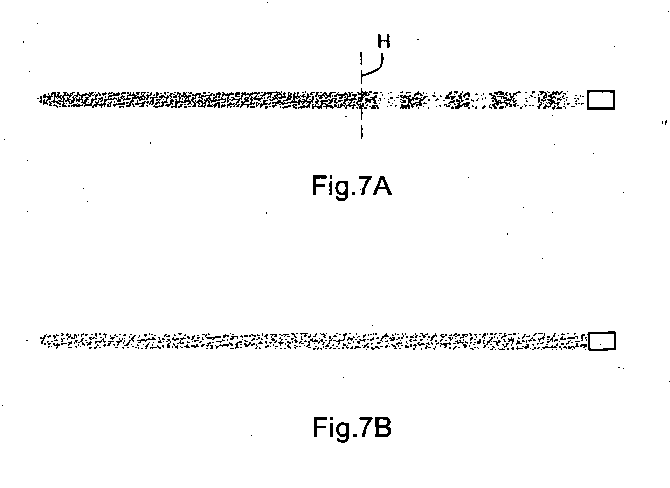

Sur les figures 7A et 7B, on a représenté des exemples de faisceaux lumineux vus par un observateur dans un guide optique rectiligne, respectivement, sans embout et avec embout. Plus précisément, l'embout de la figure 7A montre une zone chaude en début de guide optique entrecoupée d'une zone sombre, cette zone chaude et cette zone sombre se reproduisant à plusieurs reprises avant de s'estomper. On voit sur cette figure que le guide optique devient homogène approximativement à partir de la ligne pointillée référencée H. Un observateur regardant ce guide optique n'a pas le même effet visuel sur toute la longueur du guide optique. De plus, il n'a pas le même effet visuel selon la direction dans laquelle il regarde le guide, cet effet dépendant de la directivité de chaque prisme. Au contraire, la figure 7B montre un guide optique dans lequel la répartition lumineuse est sensiblement identique sur toute sa longueur, dans toutes les directions. Il n'y a aucune transition entre une zone homogène et une zone inhomogène L'observateur a le même effet visuel sur toute la longueur du guide optique, quelle que soit la direction dans laquelle il regarde ledit guide.

## Revendications

1. Dispositif d'éclairage ou de signalisation pour véhicule automobile, comportant un guide optique, une diode (1) électroluminescente et un embout de guide optique (3) assurant un couplage entre le guide optique (2) et la diode électroluminescente, cet embout (3) étant situé à l'extrémité du guide optique (2) formant la face d'entrée dudit guide, l'embout comportant
- une cavité (4) à l'intérieur de laquelle est placée au moins partiellement la diode (1), cette cavité comportant une paroi (8) apte à être traversée par des rayons lumineux émis par la diode (1), et
- une surface de réception (7) des rayons lumineux apte à réfléchir totalement lesdits rayons lumineux, émis par la diode (1) et traversant la paroi (8), à l'intérieur du guide optique (2),
**caractérisé en ce que** la surface de réception (7) comporte des profils striés assurant une réflexion des rayons lumineux émis par la diode (1) avec un angle de divergence (α) élevé, de façon à ce que les rayons lumineux soient étalés à l'intérieur du guide optique et cette surface de réception se distingue d'une surface de réflexion du guide optique à proprement parié **en ce que** cette surface de réception se situe sur une zone de section variable, avec une enveloppe généralement évasée, par exemple parabolique, et la face de réflexion du guide, elle, se situe au niveau du guide lui-même, dans une zone où le guide a une section sensiblement constante, et les stries sont de révolution dans un espace à trois dimensions (30).

2. Dispositif selon la revendication précédente, **caractérisé en ce que** la section de l'embout varie, notamment avec une forme évasée vers le guide optique (2).

3. Dispositif selon l'une des revendications précédentes, **caractérisé en ce que** la surface de réception (7) de l'embout comporte des profils striés réalisés sur une enveloppe de forme sensiblement parabolique.

4. Dispositif selon l'une des revendications précédentes, **caractérisé en ce que** la cavité (4) comporte une paroi latérale (8a) apte à assurer une traversée des rayons lumineux avec une déviation optimale propre à ramener les rayons lumineux vers la surface de réflexion et un plafond (8b) à profil strié apte à assurer un mélange des directions des rayons lumineux.

5. Dispositif selon l'une des revendications précédente, **caractérisé en ce que** les profils striés sont concaves et/ou convexes.

6. Dispositif selon l'une des revendications précédente, **caractérisé en ce que** les profils striés comportent des facettes planes.

7. Dispositif selon l'une des revendications précédentes, **caractérisé en ce que** les profils striés sont sinusoïdaux.

8. Dispositif selon l'une des revendications précédentes, **caractérisé en ce que** les profils striés présentent une courbe tangentielle discontinue ou discontinue.

9. Dispositif selon l'une des revendications précédentes, **caractérisé en ce que** les stries des profils striés ont des formes et/ou des flèches variables.

10. Dispositif selon l'une quelconque des revendications précédentes, **caractérisé en ce qu'**il comporte des profils striés présentant plusieurs type de formes.

11. Dispositif selon l'une des revendications précédentes, **caractérisé en ce que** l'embout est intégré au guide optique.

12. Dispositif selon l'une des revendications 1 à 10, **caractérisé en ce que** l'embout est rapporté sur le guide optique.

## Claims

1. Lighting or signalling device for a motor vehicle, comprising an optical guide, a light-emitting diode (1) and an optical guide joining piece (3) which assures coupling between the optical guide (2) and the light-emitting diode, this joining piece (3) being situated at the end of the optical guide (2), thus forming the intake surface of the said guide, the joining piece comprising:
- a cavity (4), in the interior of which the diode (1) is placed at least partially, this cavity comprising a wall (8) through which rays of light emitted by the diode (1) can pass; and
- a surface (7) for receipt of the rays of light, which can reflect totally the said rays of light which are emitted by the diode (1) and pass through the wall (8), to the interior of the optical guide (2),
**characterised in that** the receipt surface (7) comprises striated profiles which assure reflection of the rays of light which are emitted by the diode (1), with a large angle of divergence (α), such that the rays of light are spread in the interior of the optical guide, and this receipt surface is distinguished from a reflection surface of the optical guide itself **in that** this receipt surface is situated on an area with a variable cross-section, with an envelope which is generally splayed, for example which is parabolic, and the reflection surface of the guide, for its part, is situated at the level of the guide itself, in an area where the guide has a substantially constant cross-section, and the striations are of revolution in a three-dimensional space (3D).

2. Device according to the preceding claim, **characterised in that** the cross-section of the joining piece varies, in particular with a form which is splayed towards the optical guide (2).

3. Device according to one of the preceding claims, **characterised in that** the receipt surface (7) of the joining piece comprises striated profiles which are provided on an envelope with a form which is substantially parabolic.

4. Device according to one of the preceding claims, **characterised in that** the cavity (4) comprises a lateral wall (8a) which can assure that the rays of light pass through with optimal deflection which can bring the rays of light towards the reflection surface and a ceiling (8b) with a striated profile which can assure mixture of the directions of the rays of light.

5. Device according to one of the preceding claims, **characterised in that** the striated profiles are concave and/or convex.

6. Device according to one of the preceding claims, **characterised in that** the striated profiles comprise flat facets.

7. Device according to one of the preceding claims, **characterised in that** the striated profiles are sinusoidal.

8. Device according to one of the preceding claims, **characterised in that** the striated profiles have a tangential curve which is discontinuous or discontinuous.¹

9. Device according to one of the preceding claims, **characterised in that** the striations of the striated profiles have forms and/or pitches which are variable.

10. Device according to any one of the preceding claims, **characterised in that** it comprises striated profiles which have several types of forms.

11. Device according to one of the preceding claims, **characterised in that** the joining piece is integral with the optical guide.

12. Device according to one of claims 1 to 10, **characterised in that** the joining piece is added onto the optical guide.

## Patentansprüche

1. Beleuchtungs- oder Signalgebungsvorrichtung für Kraftfahrzeuge mit einem Lichtleiter, einer Leuchtdiode (1) und einem Lichtleiter-Endstück (3), das eine Kopplung zwischen dem Lichtleiter (2) und der Leuchtdiode gewährleistet, wobei das Endstück (3) an dem die Eintrittsfläche des Leiters bildenden Ende des Lichtleiters (2) angeordnet ist und das Endstück umfasst:
- eine Höhlung (4), innerhalb der die Diode (1) wenigstens zum Teil platziert ist, wobei die Höhlung eine Wand (8) aufweist, die von den von der Diode (1) emittierten Lichtstrahlen durchquert zu werden vermag, und
- eine Fläche (7) zur Aufnahme der Lichtstrahlen, die die von der Diode (1) emittierten und die Wand (8) durchquerenden Lichtstrahlen vollständig in den Lichtleiter (2) hinein zu reflektieren vermag,
**dadurch gekennzeichnet, dass** die Lichtaufnahmefläche (7) Rillenprofile aufweist, die die von der Diode (1) emittierten Lichtstrahlen mit einem großen Streuungswinkel (α) solchermaßen reflektiert, dass die Lichtstrahlen innen im Lichtleiter aufgefächert werden, und sich die Lichtaufnahmefläche von einer Reflexionsfläche des Lichtleiters genau genommen dadurch unterscheidet, dass die Lichtaufnahmefläche auf einem Bereich mit variablem Querschnitt mit einem allgemein erweiterten, zum Beispiel parabolischen Mantel angeordnet ist, und die Reflexionsfläche des Lichtleiters ihrerseits in Höhe des Lichtleiters selbst in einem Bereich angeordnet ist, in dem der Lichtleiter einen im Wesentlichen konstanten Querschnitt hat, und dass die Rillen in einem dreidimensionalen Raum (3D) rotationsförmig sind.

2. Vorrichtung nach dem vorhergehenden Anspruch,
**dadurch gekennzeichnet, dass** sich der Querschnitt des Endstücks insbesondere mit einer erweiterten Form in Richtung des Lichtleiters (2) verändert.

3. Vorrichtung nach einem der vorhergehenden Ansprüche,
**dadurch gekennzeichnet, dass** die Lichtaufnahmefläche (7) des Endstücks Rillenprofile aufweist, die auf einem im Wesentlichen parabolischen Mantel ausgeführt sind.

4. Vorrichtung nach einem der vorhergehenden Ansprüche,
**dadurch gekennzeichnet, dass** die Höhlung (4) eine Seitenwand (8a) aufweist, die einen Durchgang der Lichtstrahlen mit einer optimalen Ablenkung zu gewährleisten vermag, die geeignet ist, die Lichtstrahlen zur Reflexionsfläche zurückzuführen, sowie eine Decke (8b) mit Rillenprofil, die ein Mischen der Strahlenrichtungen zu gewährleisten vermag.

5. Vorrichtung nach einem der vorhergehenden Ansprüche,
**dadurch gekennzeichnet, dass** die Rillenprofile konkav und/oder konvex sind.

6. Vorrichtung nach einem der vorhergehenden Ansprüche,
**dadurch gekennzeichnet, dass** die Rillenprofile ebene Facetten aufweisen.

7. Vorrichtung nach einem der vorhergehenden Ansprüche,
**dadurch gekennzeichnet, dass** die Rillenprofile sinusförmig sind.

8. Vorrichtung nach einem der vorhergehenden Ansprüche,
**dadurch gekennzeichnet, dass** die Rillenprofile eine tangentenstetige oder tangentenunstetige Kurve aufweisen.

9. Vorrichtung nach einem der vorhergehenden Ansprüche,
**dadurch gekennzeichnet, dass** die Rillen der Profile variable Formen und/oder Wölbhöhen haben.

10. Vorrichtung nach einem der vorhergehenden Ansprüche,
**dadurch gekennzeichnet, dass** sie Rillenprofile mit mehreren Formtypen aufweist.

11. Vorrichtung nach einem der vorhergehenden Ansprüche,
**dadurch gekennzeichnet, dass** das Endstück in den Lichtleiter integriert ist.

12. Vorrichtung nach einem der Ansprüche 1 bis 10,
**dadurch gekennzeichnet, dass** das Endstück auf den Lichtleiter aufgesetzt ist.
